# EUROPEAN PATENT APPLICATION

(11) **EP 3 270 348 A1**
(43) Date of publication of application: **17.01.2018**
(21) Application number: 17386024.8
(22) Date of filing: 12.07.2017
(51) Int. Cl.: G06Q 30/02, G06Q 50/30

(54) **AUTOMATED CONTROLLED PARKING FEE MANAGEMENT SYSTEM**

(30) Priority: 13.07.2016 GR 20160100377
(71) Applicant: Nanotronix Computing Inc, Wilmington, DE 19806 (US)
(72) Inventor: Angelakos, Evangelos, 69-100 Komotini, Thrace (GR)
(74) Representative: Papaconstantinou, Helen

(57) **Abstract**

The present invention relates to an automated fee management system for controlled parking areas which are developed along roads that serve moving vehicles (alongside parked vehicles) and generally in areas where it is not easy or beneficial to restrict their entry or exit points in order to enforce parking control at those points.

This new automated fee management system for controlled parking areas combines special automated Control Vehicles and Pay Stations with a central Database that interconnects them.

Although this invention identifies parked vehicles by their license plate numbers - as part of the Control Vehicle functions, it prescribes the methods and systems that are required in order to prevent further use of the vehicles' license plate numbers, making their storage or further processing impossible for the controlled parking area's administrative authority or third parties intercepting such data during transmission.

## Description

The present invention concerns an automated fee management system for controlled parking areas, which are developed along roads that serve moving vehicles (alongside parked vehicles) and generally in areas where it is not easy or beneficial to restrict their entry or exit points in order to enforce parking control at those points.

The purpose of a controlled parking management system, where parking is offered as a service or sublet for a fee over a definite period of time, is to make it easy for drivers to use these areas, and to ensure their efficient control (cross-referencing of payments - parked vehicles) with the minimum resources possible.

The most widespread controlled parking and fee management system requires the procurement of a single-use card, the marking of this card indicating the parking starting time (by tampering specific areas on the card), and the appointment of qualified personnel for conducting on-site inspections on foot, for each vehicle, in order to cross-reference the current time with that pointed on the card. It is easy to understand that this is not the best solution in terms of the drivers' convenience, who need to obtain the card, tamper it to point the time and return to their vehicles in order to place these special cards in the vehicle, or in terms of the administrators' human resources utilization, or in terms of managing its ecological footprint (creation of waste and consumption of paper, special ink, etc.).

Newer, less widespread, methods use mobile phones to electronically pay the parking fee. The main disadvantage of these methods is that they operate in addition to the single-use card system because various problems would be raised in the possible exclusion of drivers that do not have a mobile phone (or do not want to use it to make the payment) if payments were made via mobile phones only. Moreover, in recent years, the collection of civilian personal and behaviour data by the authorities, is a tactic increasingly viewed with scepticism. By making a payment via a mobile, the vehicle registration number - for which the payment is being made - can be uniquely combined with the mobile phone number making the payment, the day/time of the payment and possibly the exact parking spot, with all of the aforementioned data.

This invention addresses the problems that were previously mentioned. Specifically, it allows its deployment without supporting methods like single-use cards, while in terms of the centrally-collected data, vehicle license number plates or information concerning the drivers' behaviour are not transmitted.

Moreover, this invention requires minimum human resources to support the inspection and cross referencing procedure, while it does not require any special infrastructure (e.g. special parking space markings or numbering, etc.) for its implementation.

This new controlled parking fee management system is developed around three main points: a. special automated Control Vehicles (control/patrol vehicles); b. Pay Stations (or Points Of Sale - POS) that carry out the payments of the parking fees; and c. a Database which interconnects the previous two points: namely the Control Vehicles with the Pay Stations, in the manner described below.

More specifically and with regard to the control vehicle: these are vehicles that move parallel to the parked vehicles and carry special equipment which allows them to recognize their number plates. The equipment comprises of:
1. Means for obtaining the parked vehicle's license plate number.
2. Global Positioning System (GPS) for recording of the each license plate's number recognition point, spatial and temporal.
3. Wireless connection system for communication with the Database.
4. Conventional screens and keyboard or touch screens for the interaction of the proposed processing device with the control vehicle's operators.
5. Computer that interconnects all the above.

When the license number plate is to be obtained using visual means (via camera), then the special Control Vehicle must have at least one (1) installed, and it is proposed that two (2) cameras are installed along its axis of motion, with the first and second being mounted at an angle of 0..-20° and/or 0..+20° , relative to the axis that crosses vertically the Control Vehicle's axis of motion and on the side of the parked vehicles.
The cameras scan the parked vehicles and obtain their number plates. Each camera is responsible for tracing either the front or the rear side of the parked vehicles, so that the parked vehicle's number plate can be successfully obtained from at least one of them.

Optionally, for visually-obtained license plate numbers, the Control Vehicle may have up to two extra cameras placed in parallel with the other cameras in terms of the vehicle's axis of motion, so that it is possible for the Control Vehicle to scan, in a single pass, both sides of the road when moving in single direction roads, where vehicles can be parked on both of its sides.

It is proposed that a computer and a global positioning system are installed in the Control Vehicle to record the successful or unsuccessful recognition of the parked vehicle's license plate number as well as the spatial and time point that this took place. More specifically:
1. It will record the time and position (derived from the global positioning system) where the successful recognition of a parked vehicle's license plate number took place, together with that vehicle's license plate number and a photograph of that vehicle.
2. It will also be able to record the time and position (derived from the global positioning system) where the recognition of the parked vehicle's license plate number was unsuccessful, together with a photograph of the vehicle whose license plate number was not recognised.
The computer will place the successfully obtained license plate numbers, for as long as the payment of the parking fee remains outstanding, in a table from which it will export a Minimum Representation of Alphanumeric Data, that is necessary to fully describe the table's data in its entirety, and able to uniquely distinguish every entry in that table. For example, if the successfully recognized parked vehicles (having their parking fee payment outstanding) have the license plate numbers: ABC-2345, ABE-6543, ABE-2467 and ABZ-4578, the Minimum Representation of Alphanumeric Data could have the form of ***-***{5, 3, 7, 8}. The first three asterisks symbolise three null sets of all the possible letter combinations for the first three elements of the license plate number (letters { A, B, E, Z, H, I, K, M, N, O, P, T, Y, X }), while the next three asterisks symbolise three null sets of all the possible number combinations for the next three elements of the license plate number (numbers {0, 1, 2, 3, 4, 5, 6, 7, 8, 9}). The last set, which corresponds to the last element of the license plate number is not null and comprises of the numbers 5, 3, 7 and 8.
Respective Minimum Representations can arise for every combination of elements that may make up the vehicle's license plate number pursuant to existing legislation, while the specific Minimum Representation covers all the elements of the initial table and it is possible to uniquely determine each of its entries with the choice of a number from the set {5, 3, 7, 8}.

It is proposed that the Control Vehicle's computer generates more than one table in which it will register the successfully recognized number plates, for which the parking fee payment remains outstanding, and export the Minimum Representation of Alphanumeric Data for each such table, so that each Minimum Representation is as small as possible in size / as broader as possible in generality.

It is proposed that the Control Vehicle's computer then uses its attached wireless communication equipment to connect with the Database and transmit this/these Minimum Representation(s) to the Database along with a geographical (or other) identification of each Representation. E.g. Minimum Representation Street A, building block B, zone C or even sub-table 1 of 3 of zone C, where zones are defined as the non-overlapping sub-areas into which the total controlled parking area can potentially be divided to.

The Minimum Representation calculation process and its transmission to the Database needs to be repeated every time a change related to the tables (from which the Minimum Representations arise) occurs: Either due to the addition of a new license plate number (from the parked vehicle license plate number detection/obtaining process), or due to the removal of a license plate number (from the parking fee payment process).

According the above mentioned procedures, it is understood that the proposed management system of controlled parking fees does not require the transmission or storage of parked vehicles' license plate numbers, but only the transmission and storage of the special representation of them (Minimum Representation). From this new encoded format it is not possible to extract any information specific to a driver or a vehicle, but only data necessary for the system to fulfill its purpose, which is to manage fees (validate payment to vehicle matching).

It is proposed that a screen (touch or conventional screen/keyboard) is installed in the Control Vehicle, which will provide the driver/operator with a map (a top-down view of the road on which the Control Vehicle is moving), and will distinguish in shape and in colour, all the possible statuses of the vehicles in the specific area (e.g. if they have paid the parking fee or not).

With regard to the colour representation of the parked vehicles, it is proposed that the driver/operator of the control vehicle (or the lawful authority) is able to proceed with specific actions (e.g. issue a fine, manual entry of number plate details that were not automatically recognised, etc.).

As far as carrying out the parking fee payments is concerned, special Pay Stations are proposed to setup. Pay Stations can be interconnected (wirelessly or with cables) with the Database and request Minimum Representations, as well as return payment clearing messages, related to those Minimum Representations.

Specifically, via these Stations, drivers can request the Minimum Representations related to the area they have parked their cars in, and based on their license plate numbers, pay their corresponding parking fee. In the example set out in paragraph 0011, the driver of ABZ-4578 would receive (via the Pay Station) Minimum Representation ***-***{5, 3, 7, 8}, and after paying the parking fee would update (via the Pay Station) the Database about the payment clearance. The payment clearance message would containing a selected fragment of the Minimum Representation best matching the vehicles license plate number (in this example: ***-***{8}) together with the vehicles license plate number checksum.
In order to calculate the checksum, the Alphanumerics of the license plate number are converted into numbers with the help of a look-up table, and these numbers are then summed up. In a possible implementation of this table, the letters A, B, Z are converted to 1, 2, 4, (as the first, second and fourth allowable letter respectively), while the numbers 4, 5, 7, 8 remain unchanged. In this case the checksum for ABZ-4578 would be: (1 +2+4)+(4+5+7+8)=31.
Specifically, the Pay Station would transmit the payment clearance to the Database in the form ***-***{8},31 and the Database would then forward the payment clearance to the Control Vehicle which calculated the initial Minimum Representation (***-***{5, 3, 7, 8}). The Control Vehicle would respond by sending back to the Database a new Minimum Representation which would arise from the table of the license plate numbers with outstanding parking fee payment, after removing ABZ-4578 from the table, and could have the form ***-***{5, 3, 7}.

In case there is a parking fee payment for a vehicle, whose registration number has not been identified yet by the Control Vehicle, (and hence it is neither included in the table of license plate numbers with pending parking fee payments, nor in the corresponding Minimum Representation), the Pay Station should transmit information about its license plate number - in excess of the received (by the Database) Minimum Representation and despite the fact that this license plate number is not included in this Minimum Representation - as well as the checksum, according to the procedure described in paragraph 0019.
In the example of paragraph 0011, if the payment was made for the license plate number ABX-8866 (which is not covered by the Minimum Representation ***-**{5, 3, 7, 8}), the Pay Station could send a parking fee clearance message with the following form: ***-***{6},45 (where the checksum is calculated as follows: (1+2+14)+(8+8+6+6)=45), according to the example described in paragraph 0019.

As far as the payment clearances transmitted from the Database to the Control Vehicle are concerned, the Control Vehicle must remove the vehicle that made the payment from its table of license plate numbers with outstanding parking payment fees at all times. If it is not possible to match one payment/clearance with only ONE vehicle, the payment/clearance must cover EVERY vehicle matching the clearance message for the duration of the payment period (e.g. one hour).

Key importance for the system is the circular frequency of the controls. That is, the time that lapses between two consecutive Control Vehicle passages from the same point of the controlled parking area under its supervision. For the smooth operation of the system, it is recommended that the circular frequency of the controls remains a fraction of the maximum permissible parking time (e.g. approximately %, or 15 minutes of the permissible 60 minute parking time).

Pay Stations can be special automatic payment devices or Points Of Sale (POS). The following could act as Pay Stations:
1. Smart devices in the form of mobile phones, tablets, etc with the installation of a special application which will be provided by the administrator of the controlled parking system.
2. Conventional telephones which could pay the parking fee by making a telephone call or sending a text message.

The Pay Station will provide the parking service users with an easy and user-friendly interface, with an appropriate environment and tabs to easily carry out the payment process.

At the Pay Stations, the driver will specify (approximately) which area she/he has parked the vehicle and the Station will obtain the Minimum Representation for the specified area from the Database. The driver will then complete his vehicle's license plate number plate and the Pay Station will clear the payment via the previously-mentioned procedures and systems.

## Claims

1. Automated management system for controlled parking fees, which is **characterized by** the fact that it is developed around the following three points:
a. Automated control vehicles (Control Vehicles), which identify the license plate numbers of parked vehicles while moving alongside them, with the use of special equipment (optical devices/cameras or other).
License plate number identification is the generation of computer processable data. In the case of cameras, the image of a license plate number is converted into an alphanumeric string.
b. Pay Stations, which are used to process parking fee payments.
c. A central Database, interconnecting Control Vehicles and Pay Stations.

2. System according to claim 1 which is **characterized by** the fact that it can identify the license plate numbers of parked vehicles, in a massive and automated way, and correlate them to fee payments for the purpose of properly managing a controlled parking area.

3. System according to claims 1 and 2, **characterised by** the fact that it restricts the use of the license plate numbers at its end points (Control Vehicles, Pay Stations) and ensures that by using the data transmitted between these end points it is not possible to recover the license plate numbers of the vehicles using the system or confirm if a specific license plate number is amongst them (the license plate numbers of the vehicles using the system).

4. Installation, providing the means to administrate fee payments in managed parking areas comprised by: Control Vehicles and Pay Stations which are (both) equipped with computers, means of communication, special equipment for automating control, as well as a Database for communicating data between Control Vehicles and Pay Stations.

5. Installation, according to claim 4, **characterised by** the fact that the Control Vehicle, that moves alongside the parked vehicles, is equipped with cameras that scan the parked vehicles for the purpose of acquiring their license plate number.

6. Installation, according to claim 4, **characterised by** the fact that the Control Vehicle has a computer that is responsible for recording, processing and producing all the data necessary for the implementation of the proposed system.

7. Installation, according to claim 4, **characterized by** the fact that the Control Vehicle is equipped with wireless networking equipment, interconnecting the Control Vehicle's computer with the Database for the purpose of communicating data related to outstanding payments of parking fees (from the Control Vehicle) and payment clearance data (to the Control Vehicle).

8. Installation, according to claim 4, **characterized by** the fact that the Pay Station is equipped with wired or wireless networking equipment, interconnecting the Pay Station with the Database for the purpose of communicating data related to outstanding payments of parking fees (to the Pay Station) and payment clearance data (from the Pay Station).
